# EUROPEAN PATENT SPECIFICATION

(11) **EP 1 878 482 B1**
(45) Date of publication and mention of the grant of the patent: **06.07.2011**
(21) Application number: 06745705.1
(22) Date of filing: 26.04.2006
(51) Int. Cl.: B01D 39/16, B01D 39/00, D04H 1/42, D04H 1/72, A47L 9/14

(54) **FILTER MEDIUM, PROCESS FOR PRODUCING THE SAME, METHOD OF USE THEREOF, AND FILTER UNIT**
FILTERMEDIUM, HERSTELLUNGSVERFAHREN DAFÜR, VERWENDUNGSVERFAHREN DAFÜR UND FILTEREINHEIT
MILIEU FILTRANT, PROCEDE DE PRODUCTION, PROCEDE D' UTILISATION ET ENSEMBLE DE FILTRATION

(30) Priority: 26.04.2005 JP 2005128019
(43) Date of publication of application: 16.01.2008
(73) Proprietor: NITTO DENKO CORPORATION, Ibaraki-shi, Osaka 567-8680 (JP)
(72) Inventor: HORIE, Yuri, NITTO DENKO CORPORATION, Ibaraki-shi, Osaka 5678680 (JP); KAWANO, Eizo, NITTO DENKO CORPORATION, Ibaraki-shi, Osaka 5678680 (JP); MORI, Masaaki, NITTO DENKO CORPORATION, Ibaraki-shi, Osaka 5678680 (JP)
(74) Representative: Intès, Didier Gérard André
(86) International application number: PCT/JP2006/308727
(87) International publication number: WO 2006/115270

(56) References cited:
- WO-A1-2004/088024
- WO-A1-2005/107557
- JP-A- 03 052 610
- JP-A- 07 024 231
- JP-A- 2002 370 020

## Description

### Technical Field

The present invention relates to a filter medium including a porous polytetrafluoroethylene membrane, a method of manufacturing the same and a method of using the same. The present invention also relates to a filter unit including the filter medium.

### Background Art

Conventionally, high efficiency filter media used for ventilation of a clean room or intake air for a turbine often employ paper-like filter media made of glass fibers with an added binder. Such glass fiber filter media, however, include minute fibers attached thereto and bending them while processing causes self-dusting, and thus the filter media may contaminate the clean room or inside of the turbine with the glass fibers.

For this reason, much attention was drawn in recent years to filter media including a porous polytetrafluoroethylene (PTFE) membrane (PTFE filter media) as described in JP2000-61280 A (Reference 1), for example. The filter media described in JP2000-61280 A includes a porous PTFE membrane and an air-permeable support member, and thus they can reduce remarkably the problems of attached minute fibers and self-dusting found in the glass fiber filter media. PTFE filter media, however, tend to have a higher collection efficiency and to enlarge the increase in pressure drop while in use when compared to the glass fiber filter media having about the same pressure drop as that of the PTFE filter media. For these reasons, long-term use of the PTFE filter media is difficult in an environment full of dust.

In order to solve such problems, the PTFE filter media described in JP2002-370009 A (Reference 2), for example, have each an air-permeable supporting member constituted by fibers with diameters in a range from 0.2 µm to 15 µm, for giving the supporting member a function as a prefilter, and thus the materials are intended to reduce the increase of pressure drop while in use.

The PTFE filter media described in JP2002-370009 A, however, have an average diameter for the constituent fibers of the air-permeable supporting member of at least a few µm, which is more than a few times larger than the average diameter for the constituent fibrils of the porous PTFE membrane. Since this means the pore diameters of the air-permeable supporting member are larger than those of the porous PTFE membrane, ultrafine particles having diameters of up to 0.5 µm are collected more by the porous PTFE membrane than by the air-permeable supporting member. Thus, the increase in pressure drop while in use becomes larger depending on environments in which the filter media are used, such as a gas to be filtered containing a large proportion of ultrafine particles. Although the increase of the pressure drop can be inhibited by increasing the thickness of the air-permeable supporting member to reduce the amount of the ultrafine particles collected by the porous PTFE membrane, it may cause deterioration in air permeability of the filter media after pleating, depending on the degree of the increase.

### Disclosure of Invention

Accordingly, an object of the present invention is to provide a filter medium, a method of manufacturing the same, a method of using the same, and a filter unit that are able to reduce an increase in pressure drop while in use even in an environment, for example, where ultrafine particles form a large proportion of the particles to be collected.

The filter medium of the present invention includes a porous PTFE membrane, an air-permeable supporting member and a web layer made of polymeric fibers and formed by electrospinning.

The filter unit of the present invention includes the filter medium of the invention and a supporting frame for supporting the filter medium.

The method of manufacturing a filter medium of the present invention is a method of manufacturing the filter medium of the invention including forming a web layer made of polymeric fibers by depositing the polymeric fibers by electrospinning on a principal surface of a laminate including a porous PTFE membrane and an air-permeable supporting member.

The method of using a filter medium of the present invention is a method of using the filter medium of the invention. The web layer is disposed upstream relative to the gas flow to be filtered compared to the porous PTFE membrane.

According to the present invention, the filter medium including a web layer made of polymeric fibers and formed by electrospinning enables reducing an increase in pressure drop while in use even in an environment, for example, where ultrafine particles form a large proportion of the particles to be collected.

### Brief Description of Drawings

Fig. 1 is a cross-sectional view schematically illustrating an example of a filter medium of the present invention.
Fig. 2 is a perspective view schematically illustrating an example of a filter unit of the present invention.
Fig. 3 is a drawing illustrating a relationship between values of DHC (Dust Holding Capacity) and pressure drops in the filter medium samples measured in the Example.
Fig. 4 is a drawing illustrating a relationship between amounts of collected DOP particles and pressure drops in the filter medium samples measured in the Example.

### Best Mode for Carrying Out the Invention

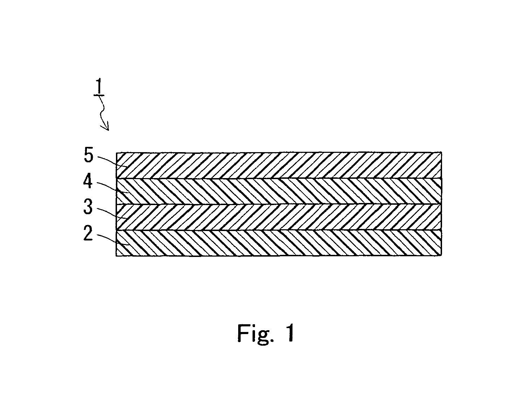

Fig. 1 shows an example of the filter medium of the present invention.

A filter medium 1 shown in Fig. 1 is a filter medium made of a laminate including an air-permeable supporting member 2, a porous PTFE membrane 3, an air-permeable adhesive layer 4 and a web layer 5. The web layer 5 is a layer made of polymeric fibers and formed by electrospinning.

Electrospinning also is known as charge induction spinning or electrostatic spinning, which is a spinning method for forming ultrafine fibers with diameters in a range from some nm to some µm. It can form fibers with a smaller average diameter compared to that of fibers formed by other spinning methods (such as meltblowing), and thus the obtained web layer 5 has a high specific surface area and a high porosity. Since the fiber diameters can be as fine as the diameters of fibrils being constituent of the porous PTFE membrane (in a range from 10 nm to 1 µm, approximately), the web layer 5 in the filter medium 1 can collect more ultrafine particles with diameters of up to 0.5 µm compared to the air-permeable supporting member described in JP2002-370009 A. Therefore, the porous PTFE membrane 3 can be inhibited from collecting the ultrafine particles intensively, and thus the increase in pressure drop while using as a filter medium can be reduced even in an environment, for example, where ultrafine particles form a large proportion of the particles to be collected. In addition, since the web layer 5 effectively can collect the particles due to the fine diameters of the fibers, an initial pressure drop in the filter medium can be reduced and furthermore, a decrease in the air permeability after pleating can be inhibited compared to the case of simply thickening the air-permeable supporting member for the purpose of reducing the pressure drop.

Due to the inclusion of the porous PTFE membrane 3 having a three-dimensional network structure in which the fibrils firmly bind to each other, development of pinholes is inhibited and thus the filter medium 1 is not easily damaged even under high air pressure.

The porous PTFE membrane 3 is not particularly limited in its structure and constitution as long as it is a porous membrane having appropriate performance as a filter. The porous PTFE membrane 3 has an average pore diameter in a range from 0.01 µm to 5 µm for example, an average fiber diameter (an average fibril diameter) in a range from 0.01 µm to 1 µm for example, a porosity in a range from 70% to 98% for example, and a thickness in a range from 2 µm to 100 µm for example. Although the pressure drop in the porous PTFE membrane 3 is not particularly limited, a pressure drop is preferably in a range from 5 Pa to 1000 Pa, more preferably in a range from 5 Pa to 200 Pa and further preferably in a range from 5 Pa to 100 Pa when air is permeated at a flow rate of 5.3 cm/sec. Although the collection efficiency of the porous PTFE membrane 3 is not particularly limited, the collection efficiency is preferably 80% or more and more preferably 99.97% or more when measured at a flow rate of 5.3 cm/sec using dioctyl phthalate (DOP) with particle diameter of 0.3 µm (refer to the Examples for the method of measuring the collection efficiency). The collection efficiency is further preferably 99.99% or more when measured at a flow rate of 5.3 cm/sec using DOP with particle diameter of 0.1 µm.

The method of forming such porous PTFE membrane 3 is not particularly limited, and it may be formed by the following method for example. First, a pasty mixture is preformed by adding a liquid lubricant to PTFE fine powder. The liquid lubricant is not particularly limited as long as it can wet the surface of the PTFE fine powder and can be removed by extraction or heating, and examples of the lubricant include hydrocarbons such as liquid paraffin, naphtha, and white oil. The amount of the liquid lubricant to be added is appropriately in a range from 5 to 50 parts by weight per 100 parts by weight of the PTFE fine powder. The preform may be carried out at a pressure that the liquid lubricant is not squeezed. Next, the preformed body is formed into a sheet by paste extrusion or rolling, and the obtained PTFE body is stretched at least uniaxially for forming a porous PTFE membrane. The PTFE body may be stretched after removing the liquid lubricant. The PTFE body stretching may be adequately conditioned, and generally it may be stretched at temperatures in a range from 30°C to 320°C in stretch ratios of from 2 to 30 for both longitudinal and lateral stretching. The porous PTFE membrane also may be heated at a temperature equal to or higher than the melting point of PTFE after stretching for firing it.

Examples for the manufacturing method other than the above may include stretching the PTFE body at a temperature equal to or higher than the melting point or mixing substances such as filler when forming the preformed body. For example, the porous PTFE membrane 3 can have antistatic properties by mixing a conductive material such as carbon particles or metal particles as the filler.

The air-permeable supporting member 2 is not particularly limited in its structure and constitution as long as it has sufficient stiffness to maintain a shape as the filter medium 1. Although materials used for the air-permeable supporting member 2 are not particularly limited, preferred materials have better air permeability than the porous PTFE membrane 3, such as felt, nonwoven fabric, woven fabric, meshes (net sheets) and other porous materials. Nonwoven fabrics are preferably used from the perspective of strength, flexibility and/or workability in manufacturing processes. In this case, by appropriately selecting fiber diameter and porosity of nonwoven fabric to be used, the air-permeable supporting member 2 can be given particle collecting ability and function as a prefilter. In addition, when using a nonwoven fabric, at least a part of the fibers being constituent of the nonwoven fabric may be conjugated fibers having a so-called core/sheath structure in order to be thermally adherable to the porous PTFE membrane 3, for example, and the melting point of the core is preferably higher than that of the sheath in this case. Since the nonwoven fabrics having a core/sheath structure are excellent in heat resistance, heating or thermocompression becomes easier when manufacturing the filter medium 1.

The web layer 5 is not particularly limited in its structure and constitution as long as it is a layer made of polymeric fibers formed by electrospinning. Average fiber diameters of the polymeric fibers are generally in a range from 10 nm to 5 µm inclusive. In order to effectively collect ultrafine particles, the average fiber diameters of the polymeric fibers are preferably no more than 1 µm, and more preferably below 1 µm. In order to further inhibit the increase in pressure drop in the filter medium, the average fiber diameters are preferably no less than 200 nm, more preferably no less than 400 nm. That is, the average fiber diameters of the polymeric fibers being constituent of the web layer 5 are preferably in a range from 200 nm to 1 µm, and more preferably in a range from 400 nm to 1 µm.

The types of polymeric fibers are not particularly limited as long as the fibers are made of polymer to which electrospinning is applicable (i.e. meltable polymer and/or polymer soluble in some solvent). Examples for the polymers that may be used are polyvinylidene fluoride, polyvinylidene fluoride-hexafluoropropylene copolymer, polyacrylonitrile, polyacrylonitrile-methacrylate copolymer, polymethylmethacrylate, polyvinyl chloride, polyvinylidene chloride-acrylate copolymer, polyethylene, polypropylene, nylon polymers such as nylon 12 and nylon-4,6, aramide, polybenzimidazole, polyvinyl alcohol, cellulose, cellulose acetate, cellulose acetate butyrate, polyvinyl pyrrolidone-vinyl acetate, poly(bis-(2-(2-methoxy-ethoxy ethoxy))phosphazene), polypropylene oxide, polyethyleneimide, polyethylene succinate, polyaniline, polyethylene sulfide, polyoxymethylene-oligo-oxyethylene, SBS copolymer, polyhydroxybutyrate, polyvinyl acetate, polyethylene terephthalate, polyethylene oxide, biodegradable polymers such as collagen, polylactide, polyglycolate, poly D,L-lactate-glycolate copolymer, polyalylate, polypropylene fumarate and polycaprolactone and biopolymers such as polypeptide and protein, pitch polymers such as coal tar pitch and petroleum pitch, and mixture of two or more selected from these polymers also may be used. Among these, polyacrylonitrile and its copolymers are preferred because they enable easy manufacture and they are excellent in the ability for collecting ultrafine particles.

The electrospinning may be a common electrospinning technique. Examples of the solvent to dissolve the polymer may he the following: (a) highly volatile solvents, such as acetone, chloroform, ethanol, isopropanol, methanol, toluene, tetrahydrofuran, water, benzene, benzyl alcohol, 1,4-dioxane, propanol, carbon tetrachloride, cyclohexane, cyclohexanone, methylene chloride, phenol, pyridine, trichloroethane and acetic acid; and (b) solvents that are relatively less volatile than the solvents listed in (a), such as N,N-dimethylformamide (DMF), dimethyl sulfoxide (DMSO), N,N-dimethylacetamide (DMAc), N-methyl-2-pyrrolidone (NMP), ethylene carbonate (EC), propylene carbonate (PC), dimethyl carbonate (DMC), acetonitrile (AN), N-methylmorpholine-N-oxide, butylene carbonate (BC), 1,4-butyrolactone (BL), diethyl carbonate (DEC), diethyl ether (DEE), 1,2-dimethoxyethane (DME), 1,3-dimethyl-2-imidazolidinone (DMI), 1,3-dioxolane (DOL), ethyl methyl carbonate (EMC), methyl formate (MF), 3-methyloxazolidine-2-one (MO), methyl propionate (MP), 2-methyltetrahydrofuran (MeTHF) and sulfolane (SL). The solvent for dissolving the polymer may be the highly volatile solvent (a) or a mixed solvent of the solvent (a) and the relatively less volatile solvent (b) to enhance the volatility of the solvent and to decrease the viscosity of the polymer solution, and thus it enables easy control over an amount of discharge from each nozzle in electrospinning, for example, to improve the productivity of the filter medium 1 by increasing the amount of discharge.

The electrospinning allows blending an emulsion, or organic or inorganic powder into a polymer melt or a polymer solution. For example, a conductive material such as carbon particles or metal powder may be blended to form the web layer 5 antistatically.

Electrospinning can control the diameter of the polymeric fiber being constituent of the web layer 5 to be formed or the thickness and/or the porosity of the web layer 5 relatively easily by controlling the spinning conditions. Filtration performance of a filter is known to be largely dependent on properties of the filter medium such as fiber diameter, thickness and porosity. Thus, appropriate spinning conditions enable formation of the web layer 5 having about the same filtration performance as the porous PTFE membrane 3. When, for example, the web layer 5 is slightly more open (has a larger average pore size) than the porous PTFE membrane 3 and is disposed upstream of the gas flow compared to the porous PTFE membrane 3, the web layer 5 collects ultrafine particles and thus the amount of the ultrafine particles collected by the porous PTFE membrane 3 can be reduced. Accordingly, an increase in pressure drop while in use can be reduced greatly even in an environment having a large proportion of ultrafine particles in the particles to be collected.

The filter medium of the present invention may have each layer being constituent of the filter medium simply stacked with each other or integrated by a technique such as adhesive lamination or heat lamination. For example, the filter medium 1 shown in Fig. 1 has the porous PTFE membrane 3 adhesively laminated to the web layer 5 via the air-permeable adhesive layer 4.

The air-permeable adhesive layer 4 may employ, for example, a hot melt adhesive in the form of powder, independent fiber and/or fiber connected by nodes.

The filter medium of the present invention does not necessarily include the air-permeable adhesive layer 4. When the filter medium of the present invention includes the air-permeable adhesive layer 4, the air-permeable adhesive layer 4 is preferably disposed adjacent to the web layer 5.

The order of disposition or the number of each layer being constituent of the filter medium of the present invention is not particularly limited and may be appropriately determined according to the properties required as a filter medium. For example, the filter medium may include the porous PTFE membrane 3 and the web layer 5, wherein a plurality of both or either one of them may be included.

Although an initial pressure drop in the filter medium of the present invention is not particularly limited, it is preferably in a range from 5 Pa to 1000 Pa in terms of a pressure drop when air permeates the filter at a flow rate of 5.3 cm/sec, more preferably in a range from 5 Pa to 300 Pa and further preferably in a range from 5 Pa to 200 Pa. Although the collection efficiency of the filter medium of the present invention is not particularly limited, it is preferably 90% or more in terms of collection efficiency measured at a flow rate of 5.3 cm/sec using DOP with a particle size of 0.3 µm, and more preferably 99.97% or more. It is further preferable to be 99.99% or more in terms of collection efficiency measured at a flow rate of 5.3 cm/sec using DOP with a particle size of 0.1 µm. Although the thickness of the filter medium of the present invention is not particularly limited, it is preferably in a range from 0.1 mm to 2 mm, more preferably in a range from 0.1 mm to 1 mm and further preferably in a range from 0.1 1 mm to 0.5 mm.

Although the filter medium of the present invention basically may be used as an air filter collecting particles included in the gas to be filtered, the use of the filter is not limited to an air filter. For example, it may be used for purposes such as liquid filtration, waterproof air-permeable filters and internal pressure control filters.

The filter medium of the present invention may be pleated.

The method of manufacturing a filter medium of the present invention enables to manufacture the filter medium of the present invention described above. Specifically, a web layer made of the polymeric fibers may be formed by depositing the polymeric fibers on a principal surface of a laminate including a porous PTFE membrane and an air-permeable supporting member using electrospinning. At this step, the layer to have the polymeric fibers deposited thereon is not particularly limited. The filter medium 1 shown in Fig. 1 may be manufactured, for example, in the following manner: a laminate is prepared which includes the air-permeable supporting member 2, the porous PTFE membrane 3 and the air-permeable adhesive layer 4 and has the air-permeable adhesive layer 4 disposed on one principal surface, the polymeric fibers are deposited on the air-permeable adhesive layer 4 of the laminate, and thus the web layer 5 is formed.

The filter unit of the present invention includes the filter medium of the present invention described above. Such a structure provides a filter unit reducing an increase in pressure drop while in use even in an environment, for example, where ultrafine particles form a large proportion of the particles to be collected.

Although the orientation of the filter unit of the present invention for the actual installation in piping is not particularly limited, the filter unit is preferably disposed with the web layer 5 upstream of the gas flow compared to the porous PTFE membrane 3 to take advantage of the greater reduction of the increase in pressure drop while in use even in an environment where ultrafine particles form a large proportion of the particles to be collected. Such a structure also can prevent the filter medium 1 from developing pinholes and damaging the layers. The filter unit may be disposed such that the web layer 5 is downstream of the gas flow compared to the porous PTFE membrane 3. When employing such a structure, the filter unit may have an extended lifespan by reducing the average pore size of the web layer 5 smaller than that of the porous PTFE membrane 3.

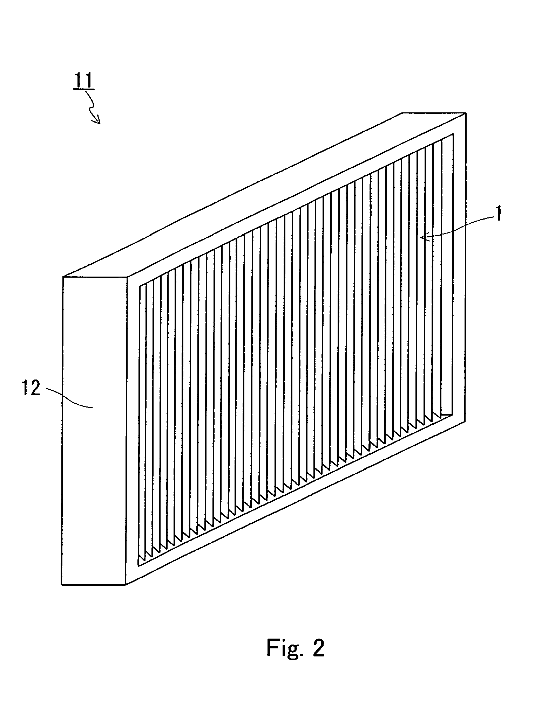

The structure and constitution of the fitter unit of the present invention is not particularly limited. It may be, for example, a filter unit 11 including the filter medium 1 of the present invention and a supporting frame 12 supporting the filter medium 1 as shown in Fig. 2. The filter medium 1 shown in Fig. 2 is pleated.

The supporting frame 12 may employ a commonly used material for filter units, and the shape of the supporting frame 12 also may be determined appropriately. The filter medium 1 may be supported in the supporting frame 12 by a manner used for general filter units.

The method of using the filter medium of the present invention greatly reduces an increase in pressure drop while in use even in an environment where ultrafine particles form a large proportion of the particles to be collected.

### Examples

Hereinafter, the present invention is described more in detail with reference to Examples. It should be noted, though, that the present invention is not limited to the Examples below.

In these Examples, filter media 1 as shown in Fig. 1 were fabricated by electrospinning to evaluate their properties.

First, methods for evaluating each fabricated sample of filter medium are described below.

### (Change with Time in Pressure Drop)

A sample of filter medium was installed in a circular-shaped holder having an effective area of 100 cm². A differential pressure was applied on both sides of the installed filter medium for being permeated by a gas, followed by measuring the pressure drop with a pressure gauge with a linear velocity of the permeating gas of 5.3 cm/sec (initial pressure drop). The sample of filter medium was installed with the web layer 5 upstream of the gas flow compared to the porous PTFE membrane 3.

Next, polydisperse DOP particles were mixed into the gas permeating the filter medium as air dust such that the concentration of particles with a size in a range from 0.1 µm to 0.15 µm was about 10⁸ particles / liter, to measure changes in pressure drop at a certain period of time.

### (Change with Time in DHC)

A gas including the DOP particles was provided to permeate a sample of filter medium in the same way as the measurement of changes with time in pressure drop, and changes in weight of the filter medium sample at certain period of time were measured with an electronic force balance, to measure changes with time in DHC (Dust Holding Capacity).

### (Method of Measuring Collection Efficiency)

A gas including the DOP particles was arranged to permeate a sample of filter medium in the same way as the measurement of changes with time in pressure drop, and a concentration of DOP particles described above on the downstream end of the filter medium was measured with a particle counter. The particle counter measured particles in a size range from 0.1 µm to 0.15 µm, and the collection efficiency was calculated from the equation: Collection Efficiency = (1 - (DOP Particle Concentration on the Downstream End / DOP Particle Concentration on the Upstream End)) × 100 (%). The collection efficiency right after starting the measurement was defined as initial collection efficiency.

### (Method of Measuring Average Fiber Diameter)

An average fiber diameter of each layer being constituent of a sample of filter medium was evaluated by analyzing a tomogram of each layer taken by a scanning electron microscope (SEM).

### (Method of Measuring Amount of Collected DOP Particles)

A gas including the DOP particles was arranged to permeate a sample of filter medium in the same way as the measurement of changes with time in pressure drop, and the amount was obtained from a difference in weight of the sample of filter medium before and after the gas permeation.

### (Example 1)

A method of fabricating each sample of filter medium used for Example 1 is described below.

### - Sample 1-

A PTFE paste was formed by uniformly mixing 100 parts by weight of PTFE fine powder and 30 parts by weight of liquid paraffin as a liquid lubricant. Next, the PTFE paste thus formed was preformed and then extrusion molded in a round bar shape, followed by rolling with a pair of metal rollers to form a PTFE film with a thickness of 0.2 m. Then, the liquid lubricant contained in the PTFE film thus formed was removed by extraction using normal decane and then the film was stretched 10 times in the longitudinal direction (lengthwise) and 30 times in the transverse direction (widthwise) to obtain a porous PTFE membrane (thickness of 10 µm, porosity of 93%, average pore size of 1.0 µm, average fiber diameter of 0.2 µm, pressure drop of 150.5 Pa, collection efficiency of 99.999). The average fiber diameters, the pressure drop and the collection efficiency were measured by the methods described above. The porosity was obtained by measuring the volume (thickness × area) and the weight of the sample (where the PTFE density was 2.28). The average pore size was measured with a perm porometer (a pore distribution meter manufactured by PMI). The film was subjected to heating at a temperature of 300°C while stretched in the longitudinal direction and heating at a temperature of 120°C while stretched in the transverse direction, and then to firing at a temperature of 400°C for 0.5 seconds after stretching.

Then, a nonwoven fabric (average fiber diameter of about 25 µm, mass per unit area of 30 g/m²) having a core/sheath structure of polyester (polyethylene terephthalate) / polyethylene was heat laminated at a temperature of 180°C as an air-permeable supporting member on one of the principal surfaces of the porous PTFE membrane thus obtained to form a laminate (thickness of 0.16 mm) of the porous PTFE membrane and the air-permeable supporting member.

Then, a heat-melted hot melt adhesive (Hirodine 6502 manufactured by Yasuhara Chemical Co., Ltd.) was atomized in the form of fibers on the porous PTFE membrane of the laminate thus formed by a fine nozzle blowing the adhesive with a flow of hot air to form an air-permeable adhesive layer having a thickness of 6 µm and mass per unit area of 20 g / m².

Then, a web layer made of polyacrylonitrile was formed by electrospinning on the air-permeable adhesive layer thus formed to fabricate the filter medium 1 (thickness of 0.2 mm) (Sample 1) as shown in Fig. 1. The average fiber diameter of the web layer was 420 nm. The electrospinning was carried out with an electrospinning apparatus manufactured by Katotech Co., Ltd. (a nanofiber electrospinning unit) by the following procedure. First, 10 parts by weight of polyacrylonitrile was dissolved in a mixed solvent of 20 parts by weight of dimethylacetamide and 60 parts by weight of acetone to form a polyacrylonitrile solution. Next, the laminate thus formed, made of the air-permeable supporting member, the porous PTFE membrane and the air-permeable adhesive layer was fixed to a stainless steel roller (100 ϕ) with the air-permeable adhesive layer, on which the web layer is to be formed, pointing upward and the polyacrylonitrile solution thus formed was sprayed on the laminate using a syringe with an inner diameter of 0.9 mm. To carry out this procedure, a voltage of 17.5 kV was applied between the stainless steel roller and the syringe (the roller is grounded), the roller then was rotated at a rate of 14.9 m/min and thus the syringe was moved in a direction of the roller axis at a rate of 19.8 cm/min. It was sprayed for 30 minutes of time. The current between the roller and the syringe was 0.003 mA during the electrospinning.

### - Sample A (Comparative Example) -

A laminate was fabricated in the same manner as Sample 1, made of an air-permeable supporting member, a porous PTFE membrane and an air-permeable adhesive layer, and a meltblowing nonwoven fabric made of polypropylene (PP) (average fiber diameter of 2 µm, mass per unit area of 30 g/m²) was laminated on the air-permeable adhesive layer instead of the web layer to form Sample A. The thickness of Sample A was 0.3 mm.

### - Sample B (Comparative Example) -

A laminate fabricated in the same manner as Sample 1, made of an air-permeable supporting member and a porous PTFE membrane, was defined as Sample B without further processing.

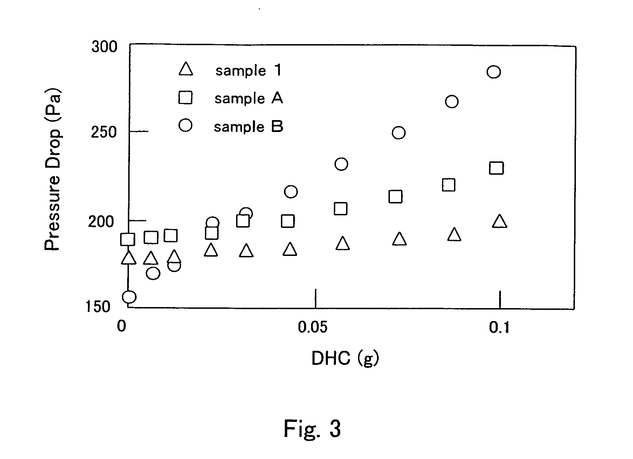

Each sample thus obtained was subjected to evaluation of each property according to the methods above. Table 1 below shows the results of initial pressure drop and initial collection efficiency. Fig. 3 shows a graph illustrating changes in pressure drop relative to DHC values. For measuring pressure drop, DHC and collection efficiency of Samples A and B, each filter medium was installed with the meltblowing nonwoven fabric of PP in Sample A and the porous PTFE membrane in Sample B on the upstream end relative to the gas flow.

**Table 1**

| Sample No. | Sample 1 | Sample A | Sample B |
|---|---|---|---|
| Initial Pressure Drop (Pa) | 178 | 190 | 152.5 |
| Initial Collection Efficiency (%) | 99.9999 | or more 99.999 or more | 99.999 or more |

As shown in Table 1 and Fig. 3, Sample 1 was a filter medium better in collection efficiency than Samples A and B, and Sample 1 successfully reduced an increase in pressure drop with increased DHC values.

### (Example 2)

A method of fabricating each sample of filter medium used in Example 2 is described below.

### - Sample 2 -

A PTFE paste was formed by uniformly mixing 100 parts by weight of PTFE fine powder and 30 parts by weight of liquid paraffin as a liquid lubricant. Next, the PTFE paste thus formed was preformed and then extrusion molded in a round bar shape, followed by rolling with a pair of metal rollers to form a PTFE film with a thickness of 0.2 m. Then, the liquid lubricant contained in the PTFE film thus formed was removed by extraction using normal decane and then the film was stretched 20 times in the longitudinal direction (lengthwise) and 30 times in the transverse direction (widthwise) to obtain a porous PTFE membrane (thickness of 15 µm, average fiber diameter of 0.02 µm, pressure drop of 125 Pa, collection efficiency of 99.98%). The average fiber diameters, the pressure drop and the collection efficiency were measured by the methods described above. The film was subjected to heating at a temperature of 300°C while stretched in the longitudinal direction and heating at a temperature of 120°C while stretched in the transverse direction, and then to firing at a temperature of 400°C for 0.5 seconds after stretching.

Then, a nonwoven fabric (average fiber diameter of about 25 µm, mass per unit area of 30 g/m²) having a core/sheath structure of polyester (polyethylene terephthalate) / polyethylene was heat laminated at a temperature of 180°C as an air-permeable supporting member on both of the principal surfaces of the porous PTFE membrane thus obtained to form a laminate (thickness of 260 µm) of the porous PTFE membrane and the air-permeable supporting member.

Then, a heat-melted hot melt adhesive (Hirodine 6502 manufactured by Yasuhara Chemical Co., Ltd.) was atomized in the form of fibers on one of the air-permeable supporting member in the laminate thus formed by a fine nozzle blowing the adhesive with a flow of hot air to form an air-permeable adhesive layer having a thickness of 6 µm and mass per unit area of 20 g / m².

Then, a web layer (thickness of 25 µm) made of polyacrylonitrile was formed by electrospinning on the air-permeable adhesive layer thus formed to fabricate a filter medium in which an air-permeable supporting member, a porous PTFE membrane, an air-permeable supporting member, the air-permeable adhesive layer and the web layer were laminated in this order (Sample 2). The average fiber diameter of the web layer was 800 nm. The electrospinning was carried out with an electrospinning apparatus manufactured by Katotech Co., Ltd. (a nanofiber electrospinning unit) in the following procedure. First, polyacrylonitrile was dissolved in an N,N-dimethylformamide solvent to form a polyacrylonitrile solution at a concentration of 12 wt%. Next, a nonwoven fabric (made of polyethylene terephthalate) was fixed to a stainless steel roller (100 (p) for spraying the polyacrylonitrile solution thus formed on the nonwoven fabric using a syringe with an inner diameter of 0.9 mm. To carry out this procedure, a voltage of 14 kV was applied between the stainless steel roller and the syringe (the roller is grounded), the roller then was rotated at a rate of 12 m/min and thus the syringe was moved in a direction of the roller axis at a rate of 19.9 cm/min. The syringe was extruded at a rate of 0.13 mm/min. Then, the web layer thus formed was separated from the nonwoven fabric to laminate it on the air-permeable adhesive layer of the laminate, and thus Sample 2 was obtained.

### - Sample C (Comparative Example) -

A laminate fabricated in the same manner as Sample 2, which was made of a porous PTFE membrane and a pair of air-permeable supporting members sandwiching the porous membrane, was defined as Sample C without further processing.

### - Sample D (Comparative Example) -

A laminate was fabricated in the same manner as Sample 2, in which an air-permeable supporting member, a porous PTFE membrane, an air-permeable supporting member and an air-permeable adhesive layer were stacked in this order, and a glass fiber filter medium with an average fiber diameter of 1 µm and a thickness of 400 µm was laminated, instead of the web layer, on the air-permeable adhesive layer of the laminate to form Sample D.

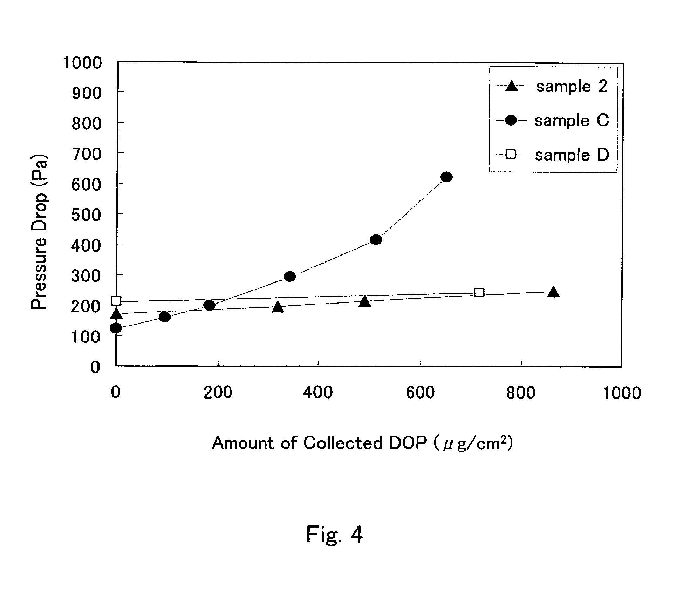

Each sample thus obtained was subjected to evaluation of each property according to the methods above. Table 2 below shows the results of measuring the initial pressure drop. Fig. 4 shows a graph illustrating changes in pressure drop relative to values of amount of collected DOP particles. For measuring pressure drop and amount of collected DOP particles of Sample D, the filter medium was installed with the glass fiber filter medium of Sample D at the upstream end relative to the gas flow.

**Table 2**

| Sample No. | Sample 2 | Sample C | Sample D |
|---|---|---|---|
| Initial Pressure Drop (Pa) | 172 | 125 | 211 |

As shown in Table 2 and Fig. 4, Sample 2 was a filter medium better in reducing an increase in pressure drop with an increased amount of collected DOP particles than Sample C, and thus a filter medium with a longer lifespan was obtained. Sample 2 successfully realized a pressure drop property at about the same level as that of Sample D even though Sample 2 had the web layer with a thickness of one sixteenth of thickness of the glass fiber filter medium of Sample D.

The invention may be embodied in other forms without departing from the spirit or essential characteristics thereof. The embodiments disclosed in this description are to be considered in all respects as illustrative and not limiting. The scope of the invention is indicated by the appended claims rather than by the foregoing description, and all changes that come with the meaning and range of equivalency of the claims are intended to be embraced therein.

### Industrial Applicability

According to the present invention, a filter medium including a web layer made of polymeric fibers formed by electrospinning enables to reduce an increase in pressure drop while in use even in an environment, for example, where ultrafine particles form a large proportion of the particles to be collected.

## Claims

1. A filter medium comprising a porous polytetrafluoroethylene membrane, an air-permeable supporting member and a web layer made of polymeric fibers and formed by electrospinning.

2. The filter medium according to claim 1, wherein the polymeric fibers have an average fiber diameter in a range from 10 nm to 5 µm inclusive.

3. The filter medium according to claim 2, wherein the polymeric fibers have the average fiber diameter of no more than 1 µm.

4. The filter medium according to claim 2, wherein the polymeric fibers have the average fiber diameter of no less than 200 nm.

5. The filter medium according to claim 2, wherein the polymeric fibers have the average fiber diameter of no less than 400 nm.

6. The filter medium according to claim 1 further comprising an air-permeable adhesive layer,
wherein the air-permeable adhesive layer is disposed adjacent to the web layer.

7. A filter unit comprising the filter medium according to claim 1 and a supporting frame for supporting the filter medium.

8. A method of manufacturing the filter medium according to claim 1, comprising:
forming a web layer made of polymeric fibers by depositing the polymeric fibers by electrospinning on a principal surface of a laminate including a porous polytetrafluoroethylene membrane and an air-permeable supporting member.

9. The method of manufacturing the filter medium according to claim 8,
wherein the laminate includes an air-permeable adhesive layer disposed on the principal surface of the laminate, and
the web layer is formed on the air-permeable adhesive layer.

10. A method of using the filter medium according to claim 1. comprising:
disposing the web layer upstream relative to gas flow to be filtered from the porous polytetrafluoroethylene membrane.

## Patentansprüche

1. Filtermedium umfassend eine poröse Polytetrafluorethylen-Membran, ein luftdurchlässiges Tragelement und eine Gewebeschicht aus mittels Elektrospinnen hergestellten Polymerfasern.

2. Filtermedium nach Anspruch 1, wobei die Polymerfasern einen durchschnittlichen Faserdurchmesser im Bereich von jeweils einschließlich 10 nm bis 5 µm aufweisen.

3. Filtermedium nach Anspruch 2, wobei die Polymerfasern einen durchschnittlichen Faserdurchmesser von nicht mehr als 1 µm aufweisen.

4. Filtermedium nach Anspruch 2, wobei die Polymerfasern einen durchschnittlichen Faserdurchmesser von nicht weniger als 200 nm aufweisen.

5. Filtermedium nach Anspruch 2, wobei die Polymerfasern einen durchschnittlichen Faserdurchmesser von nicht weniger als 400 nm aufweisen.

6. Filtermedium nach Anspruch 1, ferner umfassend eine luftdurchlässige Klebeschicht,
wobei die luftdurchlässige Klebeschicht benachbart zur Gewebeschicht angeordnet ist.

7. Filtereinheit umfassend das Filtermedium nach Anspruch 1 und einen Rahmen zum Tragen des Filtermediums.

8. Verfahren zur Herstellung des Filtermediums nach Anspruch 1, umfassend:
Ausbilden einer Gewebeschicht aus Polymerfasern durch Ablagern der Polymerfasern durch Elektrospinnen auf einer Hauptfläche eines Schichtstoffverbunds, der eine poröse Polytetrafluorethylen-Membran und ein luftdurchlässiges Tragelement umfaßt.

9. Verfahren zur Herstellung des Filtermediums nach Anspruch 8,
wobei der Schichtstoffverbund eine luftdurchlässige Klebeschicht umfaßt, die auf der Hauptfläche des Schichtstoffverbunds angeordnet ist, und
die Gewebeschicht auf der luftdurchlässigen Klebeschicht ausgebildet ist.

10. Verfahren der Verwendung des Filtermediums nach Anspruch 1, umfassend:
Anordnen der Gewebeschicht stromaufwärts bezüglich eines von der porösen Polytetrafluorethylen-Membran zu reinigenden Gasstroms.

## Revendications

1. Milieu filtrant comprenant une membrane de polytétrafluoroéthylène poreuse, un élément de support perméable à l'air et une couche de voile faite de fibres polymères et formée par électrofilage.

2. Milieu filtrant selon la revendication 1, dans lequel les fibres polymères présentent un diamètre moyen de fibres dans un intervalle de 10 nm à 5 µm inclus.

3. Milieu filtrant selon la revendication 2, dans lequel les fibres polymères présentent un diamètre moyen de fibres d'au plus 1 µm.

4. Milieu filtrant selon la revendication 2, dans lequel les fibres polymères présentent un diamètre moyen de fibres d'au moins 200 nm.

5. Milieu filtrant selon la revendication 2, dans lequel les fibres polymères présentent un diamètre moyen de fibres d'au moins 400 nm.

6. Milieu filtrant selon la revendication 1 comprenant de plus une couche adhésive perméable à l'air, dans lequel la couche adhésive perméable à l'air est adjacente à la couche de voile.

7. Unité de filtration comprenant le milieu filtrant selon la revendication 1 et un cadre de support pour supporter le milieu filtrant.

8. Procédé de fabrication du milieu filtrant selon la revendication 1 comprenant :
la formation d'une couche de voile faite de fibres polymères par dépôt des fibres polymères par électrofilage sur une surface principale d'un stratifié comprenant une membrane de polytétrafluoroéthylène poreuse et un élément de support perméable à l'air.

9. Procédé de fabrication du milieu filtrant selon la revendication 8, dans lequel le stratifié comprend une couche adhésive perméable à l'air disposée sur la surface principale du stratifié, et
la couche de voile est formée sur la couche adhésive perméable à l'air.

10. Procédé d'utilisation du milieu filtrant selon la revendication 1 comprenant :
la disposition de la couche de voile en amont relativement à l'écoulement de gaz à filtrer, à partir de la membrane de polytétrafluoroéthylène poreuse.
